# FASCICULE DE BREVET EUROPEEN

(11) **EP 1 166 402 B1**
(45) Date de publication et mention de la délivrance du brevet: **18.12.2002**
(21) Numéro de dépôt: 00914241.5
(22) Date de dépôt: 23.03.2000
(51) Int. Cl.: H01S 3/091, H01S 3/0941, H01S 3/02

(54) **MODULE DE POMPAGE OPTIQUE D'UN LASER, COMPRENANT UN REFLECTEUR CYLINDRIQUE A BASE POLYGONALE**
VORRICHTUNG ZUM OPTISCHEN PUMPEN EINES LASERS, DIE EINEN ZYLINDRISCHEN REFLEKTOR MIT POLYGONALEM QUERNSCHNITT ENTHÄLT
OPTICAL PUMPING MODULE OF A LASER COMPRISING A CYLINDRICAL REFLECTOR WITH POLYGONAL BASE

(30) Priorité: 30.03.1999 FR 9903946
(43) Date de publication de la demande: 02.01.2002
(73) Titulaire: COMMISSARIAT A L'ENERGIE ATOMIQUE, 75752 Paris Cédex 15 (FR); COMPAGNIE GENERALE DES MATIERES NUCLEAIRES, 78140 Velizy Villacoublay (FR)
(72) Inventeur: THRO, Pierre-Yves, F-91190 Gif sur Yvette (FR); UGHETTO, Gilles, F-91940 Les Ulis (FR)
(74) Mandataire: Ilgart, Jean-Christophe
(86) Numéro de dépôt international: FR0000734
(87) Numéro de publication internationale: WO00060709

(56) Documents cités:
- HEE-JONG MOON ET AL: "Efficient diffusive reflector-type diode side-pumped Nd:YAG rod laser with an optical slope efficiency of 55%" APPLIED OPTICS, vol. 38, no. 9, 20 mars 1999 (1999-03-20), pages 1772-1776, XP000828589 OPTICAL SOCIETY OF AMERICA,WASHINGTON, US ISSN: 0003-6935
- PATENT ABSTRACTS OF JAPAN vol. 1998, no. 05, 30 avril 1998 (1998-04-30) -& JP 10 022551 A (MITSUBISHI ELECTRIC CORP), 23 janvier 1998 (1998-01-23)
- HIRANO Y ET AL: "High-average-power conductive-cooled diode-pumped Nd:YLF laser" OSA TECHNICAL DIGEST - CONFERENCE ON LASERS AND ELECTRO-OPTICS (CLEO '98) PAPER CTUL5, vol. 6, 1998, pages 103-104, XP002125619 ISBN: 1-55752-339-0 cité dans la demande

## Description

### DOMAINE TECHNIQUE

La présente invention concerne un module de pompage optique d'un laser, comprenant un réflecteur cylindrique à base polygonale.

Un laser basé sur l'invention trouve des applications industrielles, notamment dans le domaine de la découpe, de la soudure, du durcissement superficiel de matériaux ainsi que celui du marquage d'objets.

Il peut également trouver des applications dans le domaine médical.

### ÉTAT DE LA TECHNIQUE ANTÉRIEURE

On sait qu'un laser comprend essentiellement un milieu amplificateur et deux miroirs formant une cavité résonante, le milieu amplificateur étant placé entre ces deux miroirs.

L'énergie nécessaire au fonctionnement d'un laser peut être fournie au milieu amplificateur de manière électrique, chimique ou optique.

Dans la présente invention, on s'intéresse à la troisième manière c'est-à-dire à ce que l'on appelle le pompage optique du milieu amplificateur et, plus précisément, au pompage optique transversal de ce milieu amplificateur.

Afin de réduire les effets qui limitent les performances du laser, la répartition de la lumière de pompage dans le milieu amplificateur doit être la plus homogène possible.

Or, si rien n'est spécifiquement entrepris dans ce sens, la répartition de cette lumière de pompage est en général inhomogène et présente souvent un maximum du côté de la source de cette lumière.

Précisons dès maintenant que l'invention concerne un moyen de rendre cette répartition homogène et présente, par rapport aux techniques existantes, des avantages de simplicité de mise en oeuvre et de réalisation et donc de coût réduit.

On sait que le milieu amplificateur d'un laser absorbe tout ou partie de la puissance de pompage et en réémet une certaine quantité sous forme d'émission stimulée, le reste de la puissance absorbée étant transformé en chaleur. Cette émission stimulée est appelée « effet laser ».

L'absorption de la puissance de pompage suit une loi exponentielle (loi de Beer-Lambert) qui se traduit par une puissance absorbée plus importante sur la partie (ou les parties) du milieu amplificateur proche(s) de la source de pompage. Ceci crée des inhomogénéités de pompage : la puissance absorbée n'est pas la même en tout point du milieu amplificateur.

Les variations de pompage en différents points du milieu amplificateur créent à leur tour des variations locales de l'indice de réfraction qui se traduisent par une déformation de la phase du faisceau laser émis.

La conséquence ultime de ces inhomogénéités de pompage est une limitation de la qualité de ce faisceau laser. En particulier, la déformation de la phase limite la puissance extraite et augmente la divergence du faisceau laser.

Pour remédier à ces inconvénients, il est connu de choisir un milieu amplificateur relativement peu absorbant à la longueur d'onde du rayonnement de pompage et un réflecteur apte à rediriger le rayonnement de pompage n'ayant pas été absorbé au premier passage, vers le milieu amplificateur. Après de multiples passages à travers ce dernier, le rayonnement de pompage finit par être totalement absorbé.

Les réflecteurs connus ont en général une surface courbe, de longueur à peu près égale à celle du milieu amplificateur, pour reconcentrer la puissance non absorbée vers celui-ci.

Des réflecteurs à surface courbe sont connus par les documents suivants :
T. Brand, I. Schmidt, « Design and performance of a compact 600 W cw Nd:YAG rod laser system pumped by microchannel-cooled stacked diode laser arrays », CMA2, CLEO Europe 96
S. Fujikawa, T. Kojima et K. Yasui, « High-power high efficient diode-side-pumped Nd:YAG laser », édité par C.R. Pollock et W. Bodsenberg, OSA TOPS vol.10, pp.296-299
K. Du et al., « Neodymium:YAG 30-W cw laser side pumped by three diode laser bars », Appl. Opt., vol.37, n°12, 20 Avril 1998, pp.2361-2364.

Un réflecteur est en général usiné dans une pièce métallique qui est ensuite polie (de manière à obtenir un polissage de qualité optique) et revêtue d'une couche réfléchissante en or, en argent ou en aluminium. La qualité du réflecteur est d'autant plus grande que le polissage est de meilleure qualité.

Or, les surfaces courbes concaves avec des rayons de courbure faibles (comme c'est le cas pour les surfaces qui sont considérées ici) sont difficiles à polir correctement. De même, la couche réfléchissante est difficile à appliquer de manière homogène.

Les réflecteurs peuvent également être usinés dans des matériaux diffusants, tels que certaines céramiques ou certains PTFE (Téflons [marque déposée]).

L'inconvénient de tels matériaux est leur mauvaise conductivité thermique qui rend difficile l'évacuation de la chaleur engendrée par l'absorption résiduelle de ces matériaux. Comme ils sont également poreux, leur utilisation nécessite parfois un traitement supplémentaire (émaillage) lorsqu'ils sont directement en contact avec un fluide de refroidissement.

Une autre technique de réalisation des réflecteurs consiste à comprimer une poudre diffusante (par exemple une poudre de MgO ou de BaSO₄) dans l'espace compris entre deux pièces de quartz.

De tels réflecteurs peuvent être longs, pénibles et coûteux à réaliser.

Le milieu amplificateur d'un laser peut être en général considéré comme une lentille convergente vis-à-vis de la source de lumière de pompage. C'est en particulier le cas dans la configuration très fréquente d'un milieu amplificateur solide formant un barreau cylindrique à base circulaire.

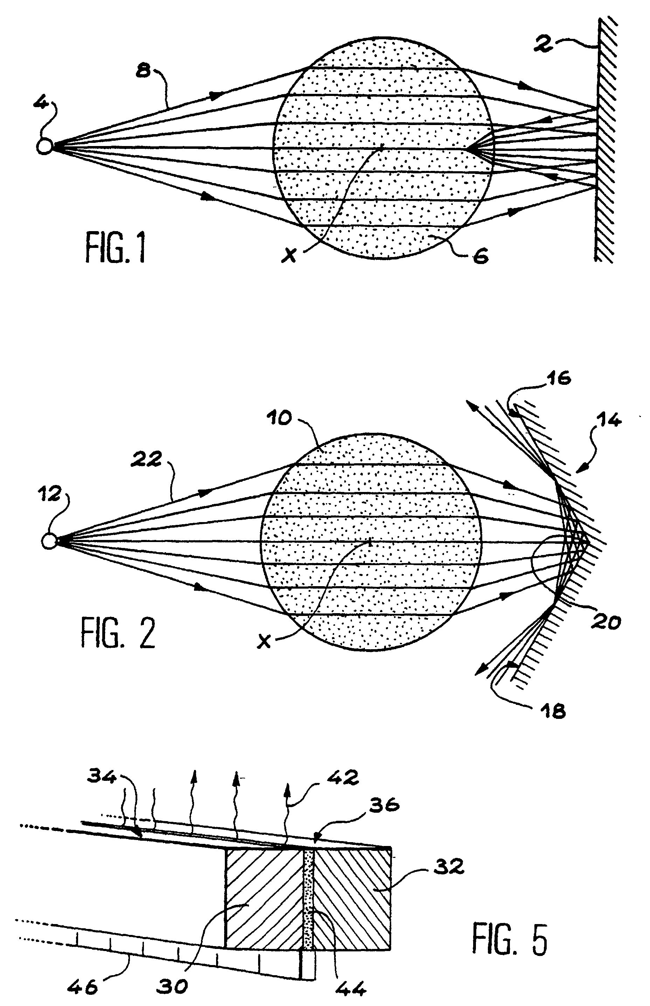

Ceci est illustré par la figure 1 qui est une vue en coupe transversale schématique d'un tel milieu amplificateur perpendiculairement à l'axe X du barreau.

Si l'on place simplement un plan réflecteur 2 et la source lumineuse de pompage 4 en face l'un de l'autre mais de part et d'autre du milieu amplificateur 6, il se produit une refocalisation du faisceau de pompage 8 sur ce milieu amplificateur ou près de ce dernier.

Cela présente l'inconvénient de créer une inhomogénéité de pompage dans le milieu amplificateur.

Un tel inconvénient existe pour le réflecteur à section polygonale connu par le document suivant :
Y. Hirano et al., « High-average-power conductive-cooled diode-pumped Nd:YLF Laser », Conference on Lasers and Electro-optics, vol.6, 1998, OSA Technical Digest Series (OSA Washington DC, 1998), pp.103-104
où les sources lumineuses (diodes lasers) de pompage optique sont en face de plans réflecteurs.

### EXPOSÉ DE L'INVENTION

La présente invention a pour but de remédier à cet inconvénient d'inhomogénéité de pompage optique.

Elle a pour objet un module de pompage optique d'un laser, ce module comprenant un milieu amplificateur formant un barreau cylindrique à base sensiblement circulaire, au moins une source de lumière prévue pour le pompage optique transversal de ce milieu, et un réflecteur qui entoure ce milieu et qui est prévu pour renvoyer, selon de multiples passages, la lumière de la source vers le milieu amplificateur afin d'homogénéiser le pompage de celui-ci, ce réflecteur formant un cylindre dont la base est un polygone sensiblement régulier afin de créer de multiples points-sources images par effet kaléidoscopique, les arêtes de ce cylindre étant parallèles à l'axe du milieu amplificateur, ce module étant caractérisé en ce que la source de lumière est placée en regard d'une arête de ce cylindre, à l'opposé de cette arête par rapport au milieu amplificateur, la distance entre ce milieu et cette source étant choisie pour optimiser l'effet d'homogénéisation du pompage optique.

Selon un mode de réalisation préféré du module objet de l'invention, le milieu amplificateur et le réflecteur sont sensiblement coaxiaux. On facilite ainsi la fabrication de ce module.

De préférence, le réflecteur a sensiblement la même longueur que le milieu amplificateur. Cela permet d'utiliser toute la longueur de ce milieu amplificateur pour le pompage optique.

Selon un premier mode de réalisation particulier du module objet de l'invention, le nombre de faces du réflecteur est impair et la source de lumière est sensiblement placée au niveau et au milieu d'une face de ce réflecteur.

Selon un deuxième mode de réalisation particulier, le nombre de faces du réflecteur est pair et la source de lumière est sensiblement placée sur une arête de ce réflecteur.

Le module objet de l'invention peut comprendre en outre plusieurs blocs, chaque bloc comprenant au moins une face plane, apte à réfléchir la lumière de la source, chaque face du réflecteur étant formée par au moins l'une des faces planes respectives des blocs.

Selon un mode de réalisation particulier du module, la source de lumière est placée dans un intervalle formé entre deux des blocs de manière que la lumière émerge de l'espace ainsi formé entre les faces planes respectives de ces deux blocs.

Selon un premier mode de réalisation particulier de l'invention, la source de lumière est un émetteur de lumière.

Cet émetteur de lumière peut comprendre une diode laser ou une barrette de diodes lasers ou une rangée de barrettes de diodes lasers, ou un empilement de barrettes de diodes lasers, ou une combinaison de ces deux géométries, cette (ou ces) barrette(s) étant parallèle(s) à l'axe du cylindre que forme le réflecteur. Lorsque l'émetteur de lumière comprend plusieurs barrettes de diodes superposées, l'espacement entre deux barrettes reste de préférence faible.

Dans ce cas où l'émetteur comprend une diode laser ou une (ou des) barrettes(s) de diodes lasers, lorsque la source de lumière est placée dans l'intervalle formé entre les deux blocs, ces derniers peuvent être électriquement conducteurs, la diode laser ou la (ou les) barrette(s) de diodes lasers étant alors alimentée(s) électriquement par l'intermédiaire de ces deux blocs.

Selon un deuxième mode de réalisation particulier du module, chaque source de lumière est un moyen de propagation de lumière dont une première extrémité est destinée à éclairer le milieu amplificateur et dont une deuxième extrémité est destinée à recevoir la lumière d'un émetteur de lumière.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 illustre schématiquement le principe d'un module de pompage optique connu et a déjà été décrite,
- la figure 2 illustre schématiquement le principe de la présente invention,
- la figure 3 est une vue en coupe transversale schématique d'un mode de réalisation particulier du module de pompage optique objet de l'invention, utilisant un réflecteur cylindrique à base polygonale comprenant un nombre impair de faces,
- la figure 4 est une vue en coupe transversale schématique d'un autre mode de réalisation particulier du module de pompage optique objet de l'invention, utilisant un réflecteur cylindrique à base polygonale comprenant un nombre pair de faces, et
- la figure 5 est une vue en perspective schématique et partielle d'une variante de réalisation du module de la figure 3.

### EXPOSÉ DÉTAILLÉ DE MODES DE RÉALISATION PARTICULIERS

Un module de pompage optique conforme à l'invention est schématiquement et partiellement représenté sur la figure 2 et comprend un milieu amplificateur 10 formant un barreau cylindrique dont la base est circulaire ou approximativement circulaire et dont l'axe est noté X.

Ce module comprend aussi une source de lumière 12 destinée au pompage optique transversal du milieu 10.

De plus, ce module comprend un réflecteur 14 formant un cylindre dont la base est un polygone régulier ou approximativement régulier.

Ce cylindre est un assemblage de plusieurs faces planes polies et éventuellement revêtue d'une couche réfléchissante ou diffusante. Seules deux faces adjacentes 16 et 18 sont représentées sur la figure 2.

Les intersections des plans des faces du cylindre constituent les arêtes de ce cylindre et l'on voit sur la figure 2 l'arête 20 correspondant aux faces 16 et 18.

Les arêtes du cylindre sont parallèles à l'axe X du milieu en forme de barreau. On précise que la figure 2 est une vue en coupe transversale du module perpendiculairement à cet axe X.

Conformément à l'invention, la source de lumière de pompage 12 est placée en regard de l'arête 20 du cylindre, à l'opposé de cette arête par rapport au milieu en forme de barreau 10.

Une telle configuration permet de créer de multiples points-sources images de la source 12 par effet kaléidoscopique.

La référence 22 de la figure 2 représente le faisceau lumineux émis par cette source 12.

Grâce à la configuration considérée, la lumière de pompage, qui n'est pas absorbée lors d'un premier passage dans le milieu amplificateur 10, se réfléchit sur le coin du réflecteur qui fait face à la source 12 (c'est-à-dire se réfléchit au voisinage de l'arête 20) et n'est donc pas refocalisée vers le milieu amplificateur 10.

De préférence, comme le montre la figure 2, la source 12 se trouve dans le plan contenant l'axe X de ce milieu amplificateur et l'arête 20 du réflecteur. Cela simplifie la fabrication du module conforme à l'invention.

Il convient de noter que, par rapport à un module de pompage comprenant un réflecteur à surface courbe, l'invention présente l'avantage de comporter des faces planes qui sont plus faciles à usiner, à polir correctement et à traiter qu'une surface courbe.

Avec un module conforme à l'invention, il est possible d'obtenir une répartition de pompage très homogène en prenant soin de disposer la ou les sources de lumière de pompage à une distance appropriée du milieu amplificateur.

Cette distance dépend principalement de la divergence du ou des faisceaux de pompage fournis par cette ou ces sources.

La ou les sources ne doivent pas être trop proches du milieu amplificateur afin d'éclairer ce dernier le plus largement possible et ne doivent pas non plus être trop éloignées de ce milieu amplificateur pour ne pas nuire au rendement total du laser en réduisant la puissance de pompage absorbée lors du premier passage de la lumière de pompage.

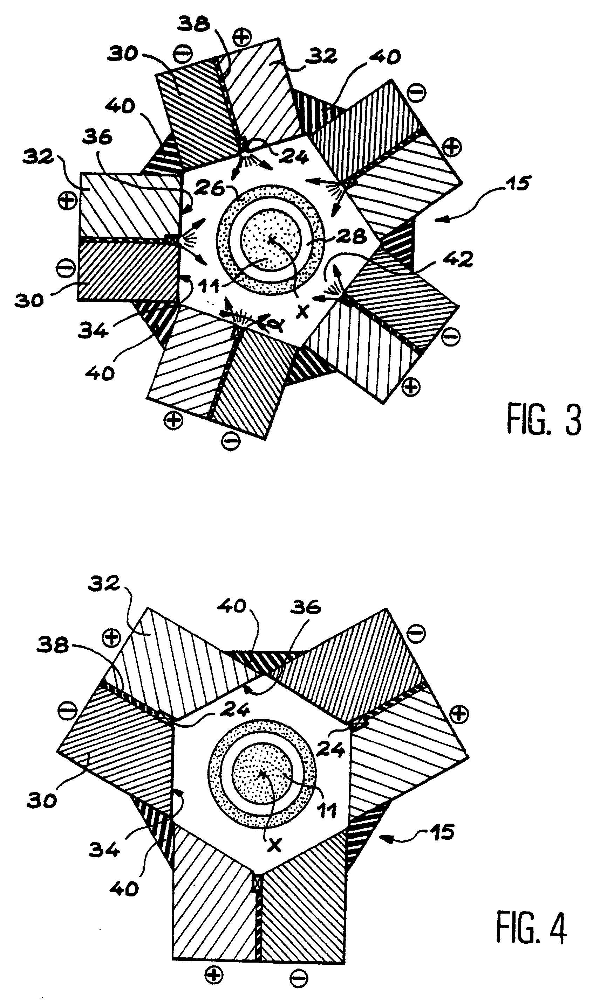

On considère maintenant les exemples des figures 3 et 4 dans chacun desquels un réflecteur 15 cylindrique à base polygonale et un milieu amplificateur 11 en forme de barreau cylindrique à base circulaire sont coaxiaux et ont à peu près la même longueur.

Dans chacun de ces exemples, le module de pompage est vu en coupe transversale perpendiculairement à l'axe X qui est commun au milieu amplificateur et au réflecteur.

Dans l'exemple de la figure 3, le réflecteur comprend un nombre impair de faces, plus précisement cinq faces, et l'on utilise en tant que source de lumière de pompage des émetteurs de lumière constitués par des barrettes de diodes lasers 24 qui sont parallèles à l'axe X.

On précise que les deux miroirs de la cavité du laser ne sont pas représentés sur la figure 3 (ni d'ailleurs sur les autres figures). Ces miroirs, qui délimitent cette cavité, sont perpendiculaires à l'axe X et respectivement placés de part et d'autre du milieu amplificateur.

Dans l'exemple de la figure 3, ce milieu amplificateur 11 est solide. Il est placé à l'intérieur d'un tube 26 qui est transparent à la lumière de pompage.

Dans l'intervalle 28 compris entre ce tube 26 et le milieu amplificateur 11, on fait circuler un liquide de refroidissement, par exemple de l'eau, grâce à des moyens non représentés, pour refroidir le milieu amplificateur.

On voit sur la figure 3 cinq groupes de deux blocs métalliques 30 et 32 ayant respectivement deux faces planes 34 et 36 qui sont coplanaires et dont la réunion constitue l'une des faces du réflecteur 15 à base pentagonale du module de la figure 3, d'où les cinq faces de ce réflecteur.

Chaque barrette de diodes lasers 24 est comprise entre les deux blocs métalliques d'un même groupe et se trouve au voisinage des faces respectives 34 et 36 de ces deux blocs, sur la ligne séparant ces deux faces.

Ceci permet l'alimentation électrique des diodes lasers de cette barrette 24 en polarisant les deux blocs de façon appropriée par des moyens symbolisés, sur la figure 3, par les signes - et + respectivement associés aux blocs 30 et 32.

On voit sur la figure 3 l'espace existant entre ces deux blocs 30 et 32, espace qui est partiellement occupé par la barrette correspondante 24. Le reste de cet espace est rempli d'un matériau électriquement isolant 38.

De même, un élément 40, fait d'un matériau électriquement isolant, sépare chaque bloc 30, appartenant à un groupe de blocs déterminé, du groupe adjacent, pour éviter un contact électrique entre ces deux blocs.

De plus, toutes les faces 34 et 36 sont polies (polissage de qualité optique) et revêtues d'un dépôt métallique réfléchissant (non représenté), qui consiste par exemple en une couche d'or.

Le faisceau de lumière de pompage 42, qui est issu de chaque diode laser et dont la divergence α vaut environ 90° dans l'exemple considéré, est envoyé vers le milieu amplificateur 11 et une portion de ce faisceau pénètre dans ce milieu amplificateur 11 où il est en partie absorbé.

La lumière qui ne pénètre pas dans ce milieu ou qui n'est pas absorbée lors du premier passage dans ce dernier est réfléchie par la couche d'or.

Au bout d'un grand nombre de réflexions, la lumière de pompage est totalement absorbée soit par le milieu amplificateur soit par la couche d'or.

Le module de la figure 4 diffère de celui de la figure 3 par le nombre de faces de son réflecteur 15 : ce nombre est pair et vaut six dans l'exemple représenté, d'où un réflecteur cylindrique à base hexagonale.

Dans l'exemple de la figure 4, on utilise trois groupes de deux blocs 30 et 32 et donc trois séries de barrettes de diodes lasers 24, chacune des barrettes étant située sur l'arête commune aux deux faces planes d'un même groupe.

Chaque face du réflecteur à base hexagonale est constituée par une face plane de l'un des blocs et les faces planes respectives de deux blocs adjacents font entre elles un angle de 120°.

En revenant à l'exemple de la figure 3, le nombre de barrettes de diodes lasers peut être inférieur à 5 et peut même être égal à 1. Ce nombre dépend de la puissance requise pour le laser correspondant.

Alors, les blocs 30 et 32 d'un même groupe qui n'est pas associé à une barrette peuvent être d'un seul tenant (sans espace entre eux) et seul chaque groupe de blocs qui est associé à une barrette doit être séparé des groupes adjacents par des éléments en matériau électriquement isolant 40.

De la même façon, le module de la figure 4 peut ne comporter qu'une ou deux barrettes de diodes lasers.

Dans le cas de cette figure 4, on peut même ajouter une barrette de diodes lasers au niveau de chaque élément isolant 40, opposé à une barrette existante par rapport à l'axe X, d'où trois barrettes supplémentaires.

En outre, chaque barrette de diodes lasers des exemples donnés en faisant référence aux figures 3 et 4 peut être remplacée par une diode laser unique si l'on n'a pas besoin d'un laser de grande puissance, ou, au contraire, par plusieurs barrettes superposées, ou alignées selon une rangée, ou par une combinaison de ces deux géométries.

Dans les exemples des figures 3 et 4, on utilise des émetteurs de lumière de pompage pour introduire directement cette lumière dans l'espace délimité par le réflecteur.

Au lieu de cela, on peut introduire cette lumière par l'intermédiaire de moyens de propagation de lumière tels que :
- des systèmes dioptriques (combinaisons de lentilles),
- des systèmes catoptriques (utilisant des miroirs) dans l'espace délimité par le réflecteur pour recevoir des faisceaux de pompage parallèles à l'axe X du milieu amplificateur, ces miroirs étant orientés de façon à envoyer ces faisceaux perpendiculairement à cet axe X vers le milieu amplificateur),
- des systèmes catadioptriques (combinaisons de lentilles et de miroirs) et
- des guides de lumière.

Ceci est illustré par la figure 5 où une variante de la figure 3 est schématiquement et partiellement représentée en perspective.

On voit l'un des groupes de deux blocs 30 et 32 entre lesquels se trouve une lame de verre 44.

Une première extrémité de cette lame 44 est au niveau des faces respectives 34 et 36 de ces blocs 30 et 32.

La deuxième extrémité de cette lame 44 est optiquement couplée à une barrette de diodes lasers 46 qui est commandée par des moyens non représentés.

Cette barrette émet la lumière de pompage 42 qui est alors transportée par la lame 44 et sort par la première extrémité de cette lame pour illuminer le milieu amplificateur (non représenté).

## Revendications

1. Module de pompage optique d'un laser, ce module comprenant un milieu amplificateur (10, 11) formant un barreau cylindrique à base sensiblement circulaire, au moins une source de lumière (12, 24, 44) prévue pour le pompage optique transversal de ce milieu, et un réflecteur (14, 15) qui entoure ce milieu et qui est prévu pour renvoyer, selon de multiples passages, la lumière de la source vers le milieu amplificateur afin d'homogénéiser le pompage de celui-ci, ce réflecteur formant un cylindre dont la base est un polygone sensiblement régulier afin de créer de multiples points-sources images par effet kaléidoscopique, les arêtes de ce cylindre étant parallèles à l'axe (X) du milieu amplificateur, ce module étant **caractérisé en ce que** la source de lumière (12, 24, 44) est placée en regard d'une arête de ce cylindre, à l'opposé de cette arête par rapport au milieu amplificateur (10, 11), la distance entre ce milieu et cette source étant choisie pour optimiser l'effet d'homogénéisation du pompage optique.

2. Module selon la revendication 1, dans lequel le milieu amplificateur (11) et le réflecteur (15) sont sensiblement coaxiaux.

3. Module selon l'une quelconque des revendications 1 et 2, dans lequel le réflecteur (15) a sensiblement la même longueur- que le milieu amplificateur (11).

4. Module selon l'une quelconque des revendications 1 à 3, dans lequel le nombre de faces du réflecteur (15) est impair et la source de lumière (24, 44) est sensiblement placée au niveau et au milieu d'une face (34, 36) de ce réflecteur.

5. Module selon l'une quelconque des revendications 1 à 3, dans lequel le nombre de faces du réflecteur est pair et la source de lumière (24) est sensiblement placée sur une arête de ce réflecteur (15).

6. Module selon l'une quelconque des revendications 1 à 5, comprenant en outre plusieurs blocs (30, 32), chaque bloc comprenant au moins une face plane (34, 36), apte à réfléchir la lumière de la source (24), chaque face du réflecteur étant formée par au moins l'une des faces planes respectives des blocs.

7. Module selon la revendication 6, dans lequel la source de lumière est placée dans un intervalle formé entre deux des blocs (30, 32) de manière que la lumière émerge de l'espace ainsi formé entre les faces planes respectives (34, 36) de ces deux blocs.

8. Module selon l'une quelconque des revendications 1 à 7, dans lequel la source de lumière est un émetteur de lumière (24).

9. Module selon la revendication 8, dans lequel cet émetteur de lumière comprend une diode laser ou une barrette (24) de diodes lasers ou une rangée de barrettes de diodes lasers, ou un empilement de barrettes de diodes lasers, ou une combinaison de ces deux géométries, cette (ou ces) barrette(s) étant parallèle(s) à l'axe (X) du cylindre que forme le réflecteur.

10. Module selon les revendications 7 et 9, dans lequel les deux blocs (30, 32) sont électriquement conducteurs et la diode laser ou la (ou les) barrette(s) (24) de diodes lasers est (ou sont) alimentée(s) électriquement par l'intermédiaire de ces deux blocs.

11. Module selon l'une quelconque des revendications 1 à 7, dans lequel la source de lumière est un moyen de propagation de lumière (44) dont une première extrémité est destinée à éclairer le milieu amplificateur et dont une deuxième extrémité est destinée à recevoir la lumière d'un émetteur de lumière (46).

## Patentansprüche

1. Vorrichtung zum optischen Pumpen eines Lasers, wobei diese Vorrichtung ein Verstärkermedium (10, 11), das einen zylindrischen Stab mit im Wesentlichen kreisrundem Querschnitt bildet, wenigstens eine Lichtquelle (12, 24, 44) für das transversale optische Pumpen dieses Mediums, und einen Reflektor (14, 15) umfasst, der dieses Medium umgibt und der vorgesehen ist, das Licht der Quelle in multiplen Passagen bzw. Durchgängen in Richtung Verstärkungsmedium zu reflektieren, um das Pumpen von diesem zu homogenisieren, wobei dieser Reflektor einen Zylinder bildet, dessen Basis ein im Wesentlichen regelmäßiges Vieleck ist, um mittels kaleidoskopischen Effekts multiple Bildquellenpunkte zu erzeugen, und die Kanten dieses Zylinders parallel sind zu der Achse (X) des Verstärkermediums,
**dadurch gekennzeichnet,**
**dass** die Lichtquelle (12, 24, 44) einer Kante dieses Zylinders gegenübersteht, in entgegengesetzter Richtung in Bezug auf das Verstärkermedium (10, 11), wobei man den Abstand zwischen diesem Medium und dieser Quelle so wählt, dass beim optischen Pumpen der optimale Homogenisierungseffekt erzielt wird.

2. Vorrichtung nach Anspruch 1, bei der das Verstärkermedium (11) und der Reflektor (15) im Wesentlichen koaxial sind.

3. Vorrichtung nach einem der Ansprüche 1 und 2, bei der der Reflektor (15) im Wesentlichen dieselbe Länge hat wie das Verstärkermedium (11).

4. Vorrichtung nach einem der Ansprüche 1 bis 3, bei der die Anzahl der Flächen des Reflektors (15) ungerade ist und die Lichtquelle (24, 44) sich im Wesentlichen in Höhe und in der Mitte einer Fläche (34, 36) dieses Reflektors befindet.

5. Vorrichtung nach einem der Ansprüche 1 bis 3, bei der die Anzahl der Flächen des Reflektors (15) gerade ist und die Lichtquelle (24) sich im Wesentlichen in Höhe und in einer Ecke dieses Reflektors (15) befindet.

6. Vorrichtung nach einem der Ansprüche 1 bis 5, die außerdem mehrere Blöcke (30, 32) umfasst, wobei jeder Block wenigstens eine plane Fläche (34, 36) aufweist, fähig das Licht der Quelle zu reflektieren, und jede Fläche des Reflektors durch wenigstens eine der jeweiligen planen Flächen des Blocks gebildet wird.

7. Vorrichtung nach Anspruch 6, bei der die Lichtquelle sich in einem Zwischenraum zwischen zwei der Blöcke (30, 32) befindet, so dass das Licht aus dem derart zwischen den jeweiligen planen Flächen (34, 36) dieser beiden Blöcke gebildeten Raum austritt.

8. Vorrichtung nach einem der Ansprüche 1 bis 7, bei der die Lichtquelle ein Lichtemitter (24) ist.

9. Vorrichtung nach Anspruch 8, bei der dieser Lichtemitter eine Laserdiode oder eine stabförmige Anordnung von Laserdioden oder einen Stapel stabförmiger Laserdiodenanordnungen oder eine Kombination beider Geometrien umfasst, wobei diese Anordnung(en) parallel ist (sind) zu der Achse (X) des Zylinders, der den Reflektor bildet.

10. Vorrichtung nach den Ansprüchen 7 und 9, bei der die beiden Blöcke (30, 32) elektrisch leitend sind und die Laserdiode oder die stabförmige(n) Anordnung (en) (24) von Laserdioden elektrisch durch diese beiden Blöcke versorgt wird (werden).

11. Vorrichtung nach den Ansprüchen 1 bis 7, bei der die Lichtquelle eine Lichtausbreitungseinrichtung (44) ist, von der ein ersten Ende dazu bestimmt ist, das Verstärkermedium zu beleuchten, und ein zweites Ende dazu bestimmt ist, das Licht eines Lichtemitters (46) zu empfangen.

## Claims

1. Laser optical pumping module, this module comprising an amplifying medium (10, 11) forming a cylindrical bar with an approximately circular base, at least one light source (12, 24, 44) provided for transverse optical pumping of this medium, and a reflector (14, 15) that surrounds this medium and that is designed to send the light from the source along several passes towards the amplifying medium in order to homogenize pumping of this medium, this reflector forming a cylinder, the base of which is an approximately regular polygon to create several image point-sources by a kaleidoscope effect, the edges of this cylinder being parallel to the axis (X) of the amplifying medium, this module being **characterized in that** the light source (12, 24, 44) is placed in front of one edge of this cylinder on the opposite side of this edge from the amplifying medium (10, 11), the distance between this medium and this source being chosen to optimise the homogenisation effect of optical pumping.

2. Module according to claim 1, in which the amplifying medium (11) and the reflector (15) are approximately coaxial.

3. Module according to either of claims 1 or 2, in which the length of the reflector (15) is approximately the same as the length of the amplifying medium (11).

4. Module according to anyone of claims 1 to 3, in which the number of faces on the reflector (15) is odd and the light source (24, 44) is at approximately the same level as and is in the middle of a face (34, 36) of this reflector.

5. Module according to anyone of claims 1 to 3, in which the number of faces on the reflector is even and the light source (24) is approximately on the edge of this reflector (15).

6. Module according to anyone of claims 1 to 5, also comprising several blocks (30, 32), each block comprising at least one plane face (34, 36) capable of reflecting the light from the source (24), each face of the reflector being formed by at least one of the plane faces of the blocks.

7. Module according to claim 6, in which the light source is placed in an interval formed between two of the blocks (30, 32) such that the light emerges from the space thus formed between the plane faces (34, 36) of these two blocks.

8. Module according to anyone of claims 1 to 7, in which the light source is a light emitter (24).

9. Module according to claim 8, in which this light emitter comprises a laser diode or a strip (24) of laser diodes or a row of strips of laser diodes, or a stack of strips of laser diodes, or a combination of these two geometries, this or these strips being parallel to the axis (X) of the cylinder formed by the reflector.

10. Module according to claims 7 and 9, in which the two blocks (30, 32) are electrically conducting and the laser diode or the strip(s) of laser diodes is (are) electrically powered through these two blocks.

11. Module according to anyone of claims 1 to 7, in which the light source is a light propagation means (44), the first end of which is intended to illuminate the amplifying medium and the second end of which is intended to receive light from a light emitter (46).
